# EUROPEAN PATENT SPECIFICATION

(11) **EP 3 822 195 B1**
(45) Date of publication and mention of the grant of the patent: **03.07.2024**
(21) Application number: 20206939.9
(22) Date of filing: 11.11.2020
(51) Int. Cl.: B65F 1/14, A47B 77/02, A47J 47/00

(54) **TABLE TOP STRUCTURE FOR WASTE DISPOSAL AND WASTE DISPOSAL SYSTEM**
TISCHPLATTENAUFBAU FÜR ABFALLENTSORGUNG UND ABFALLENTSORGUNGSSYSTEM
STRUCTURE DE DESSUS DE TABLE D'ÉLIMINATION DE DÉCHETS ET SYSTÈME D'ÉLIMINATION DE DÉCHETS

(30) Priority: 12.11.2019 FI 20195963
(43) Date of publication of application: 19.05.2021
(73) Proprietor: Aarnio, Kari, 02260 Espoo (FI)
(72) Inventor: Aarnio, Kari, 02260 Espoo (FI)
(74) Representative: Heinonen & Co

(56) References cited:
- DE-U1- 9 004 643
- DE-U1- 20 311 798
- DE-U1-202015 103 433

## Description

### FIELD OF THE INVENTION

The present invention relates to table top structures and waste disposal systems.

### BACKGROUND

Today, there exists a variety of waste disposal systems. It has become more popular to sort waste into different bins for recycling purposes. Both in households and commercial kitchens wastes is often sorted into different bins based on the waste material. For example, bio waste may be placed in one bin and plastic materials are placed in another bin.

Even though materials are already sorted in different bins, there exists a need in both household and commercial kitchens for a convenient and fast way to dispose and sort waste.

Often times when chopping food the chef may end up with a lot of plastic and bio waste. When the chopping is done the chef must place the plastic and bio waste into separate bins. This process may include taking the waste close to a bin and dumping the waste into the bin, either by hand or by pouring it with a cutting board. It may be difficult to sort the waste if both plastic and bio waste is mixed on the cutting board.

After dumping the waste into the bin the chef may take the cutting plate back to his/her cutting station and continue with the cutting process. This may be time consuming and frustrating, especially when performing it many times during the day.

DE202015103433 U1 describes a kitchen cabinet with a worktop and at least one refuse container located in the body of the kitchen cabinet, wherein the worktop comprises a recess in which a cutting board of the same cross-section is arranged pivotably and / or displaceably in the plane of the cover plate.

DE20311798 U1 presents a wheeled cutting board (1) arranged to cover an open space in the worktop (4) exactly positioned above a waste container. After use the board (1) can be pushed sideward or pulled to the front with its rollers moving along rails.

### SUMMARY OF THE INVENTION

The objective is to at least alleviate the problems described hereinabove not satisfactorily solved by the known arrangements, and to provide a feasible table top structure for waste disposal and a waste disposal system. One objective is to facilitate the waste disposal. Another objective is to facilitate waste disposal when chopping food in a kitchen environment. A further objective is to enable easy cleaning of a cutting board in a table top structure for waste disposal. A further objective is to facilitate recycling of waste.

The aforesaid objectives are achieved by the embodiments of a table top for waste disposal and a waste disposal system in accordance with the present invention.

The aforesaid objectives are achieved according to the present invention by a table top structure as claimed in claim 1.

Accordingly, in one aspect of the present invention a table top structure for waste disposal comprises
- a table top comprising
   - a top surface,
   - a bottom surface, and
   - an aperture for waste disposal,
- a movable cover comprising
   - a top surface, and
   - a bottom surface,
   wherein
- in a first position the movable cover is arranged to cover the aperture, in the first position the bottom surface of the movable cover is arranged below the top surface of the table top, and
- in a second position the movable cover is arranged to open the aperture for waste disposal through the aperture, in the second position at least part of the bottom surface of the movable cover is arranged above the top surface of the table top.

In one embodiment a third position is in an opposite direction of the second position, in the third position the movable cover is arranged to open the aperture for waste disposable through the aperture, and at least part of the bottom surface of the movable cover is arranged above the top surface of the table top.

According to the invention the table top comprises a first and second edge arranged respectively on a first and second side of the aperture, the movable cover being arranged to be movable along the first and the second edge.

According to the invention the table top comprises a first and a second chamfer edge respectively in a first and second end of the aperture, the first and second chamfer edge is arranged to guide the movable cover above the top surface of the table top when the movable cover is moved in a first direction to the second position or moved in a second direction to the third position.

In one embodiment in the first position the top surface of the movable cover is arranged above the top surface of the table top for facilitating the movement of the movable cover.

In one embodiment the movable cover comprises wheels for facilitating the movement of the movable cover.

In one embodiment the movable cover comprises at least one gripping means for facilitating the movement of the movable cover.

In one embodiment the movable cover is a cutting board.

In one embodiment the top surface of the table top comprises a wear-resistant material suitable for kitchen environment.

In another aspect of the present invention, a waste disposal system comprises
- a table top structure as described above, and
- at least one container for waste disposal arranged below the aperture.

In one embodiment the waste disposal system comprises at least two containers arranged below the aperture such that waste is disposable in a first container when the movable cover is arranged in the first position and waste is disposable in a second container when the movable cover is arranged in the second position.

The utility of the present invention follows from a plurality of factors depending on each particular embodiment. Some embodiments of the present invention may facilitate waste disposal. Further, some embodiments of the present invention may facilitate waste disposal in kitchen environments when chopping food. Some embodiments of the present invention may facilitate waste recycling. Some embodiments may enable a removable cutting board for easy cleaning.

The expression "a number of" refers herein to any positive integer starting from one (1), e.g. to one, two, or three.

The expression "a plurality of" refers herein to any positive integer starting from two (2), e.g. to two, three, or four.

Different embodiments of the present invention are disclosed in the dependent claims.

### BRIEF DESCRIPTION OF THE RELATED DRAWINGS

Next the invention is described in more detail with reference to the appended drawings in which
Fig. 1 illustrates an embodiment of a table top structure in accordance with the present invention.
Fig. 2 illustrates the table top with a movable cover in a second position.
Fig. 3 illustrates the table top with a movable cover in a third position.
Fig. 4 illustrates the table top with an open aperture.
Fig. 5 illustrates a closer view of the table top edge structures around the aperture.
Fig. 6 illustrates a second embodiment of a table top structure in accordance with the present invention.
Fig. 7 illustrates a cross-section of the table top edge structure.
Fig. 8 illustrates a side view of the second embodiment of the table top structure.
Fig. 9 illustrates an embodiment of a waste disposal system in accordance with the present invention.
Fig. 10 illustrates a top view of the waste disposal system.
Fig. 11 illustrates a top view of the bottom section of the waste disposal system.

### DETAILED DESCRIPTION OF THE EMBODIMENTS

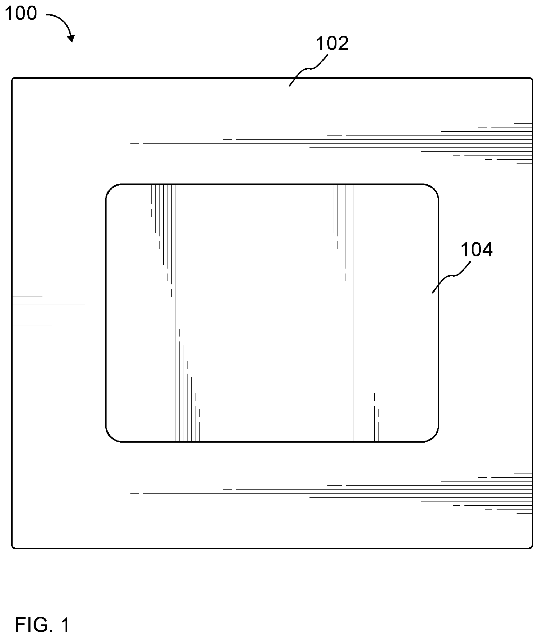

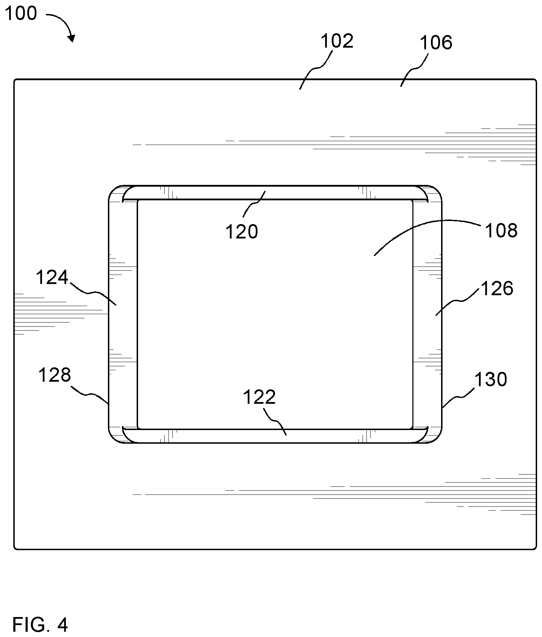

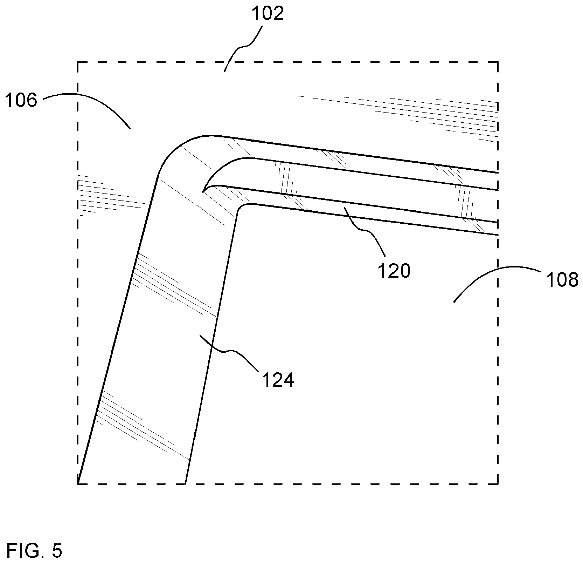

Referring to figures 1-5, the table top structure 100 comprises a table top 102 and a movable cover 104. The table top 102 comprises a top surface 106, a bottom surface (not shown) and an aperture 108. The aperture 108 is arranged in the table top 102.

The movable cover 104 is arranged to be movable over the aperture 108.

In figure 1, the movable cover 104 is arranged in a first position. In the first position the movable cover is arranged to cover the aperture 108.

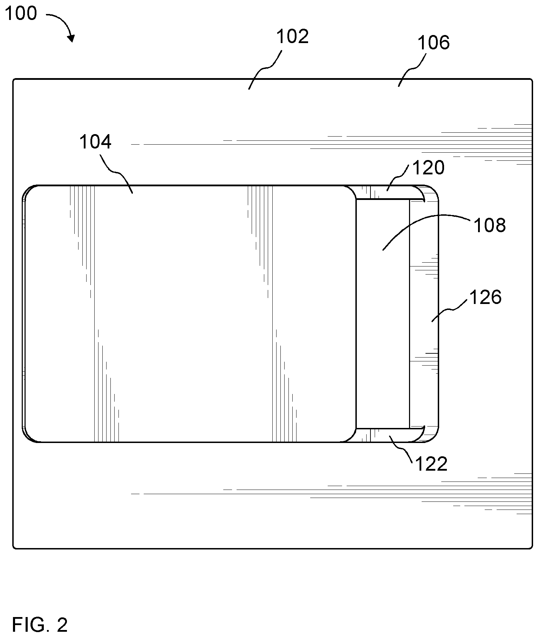

In figure 2, the movable cover 104 is moved in a first direction to a second position. In the second position the aperture 108 is open in the opposite end of the first direction. In the second position waste may be disposed through the aperture 108.

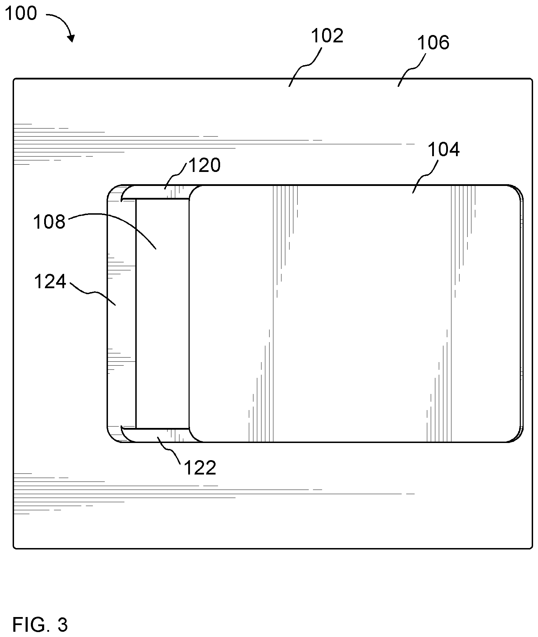

In figure 3, the movable cover 104 is moved in a second direction to a third position. In the third position the aperture 108 is open in the opposite end of the second direction. In the third position waste may be disposed through the aperture 108. The second direction may be the opposite direction of the first direction.

The table top 102 comprises a first and a second edge 120, 122 around the aperture 108 such that the movable cover 104 is movable along the first and the second edge 120, 122. The first and second edge 120, 122 are arranged below

the top surface 106 of the table top 102.

The table top 102 comprises a first and second chamfer edge 124, 126 respectively in a first and second end 128, 130 of the aperture 108. The first and second chamfer edge 124, 126 may be chamfered or rounded such that the movable cover may rise on the top surface 106 of the table top 102 when the movable cover 104 is moved to the second or third position.

The top surface of the movable cover 104 may be arranged above the top surface 106 of the table top 102. The top surface of the movable cover 104 may be 2mm above the top surface 106 of the table top 102, for example. It may facilitate the movement of the movable cover when the top surface of the movable cover is above the top surface of the table top. Further, it may protect the top surface of the table top when the top surface of the movable cover is above the top surface of the table top, if the movable cover is used as a cutting board, for example.

The movable cover may comprise gripping means for facilitating the movement of the movable cover. The gripping means may be any means enabling a better grip of the movable cover such as a loop, a handle, a knob, a cavity or a rougher surface area. The gripping means may be arranged near the first and/or second end of the movable cover, for example.

The movable cover 104 may function as a cutting board. The movable cover may be manufactured from a material suitable for a cutting board such as wood, plastic or stone material. Alternatively, the movable cover may have a surface or layer that is suitable for a cutting board.

The top surface 106 of the table top 102 may comprise wear-resistant material such as DuPont^{™} Corian^{®} suitable for kitchen environment.

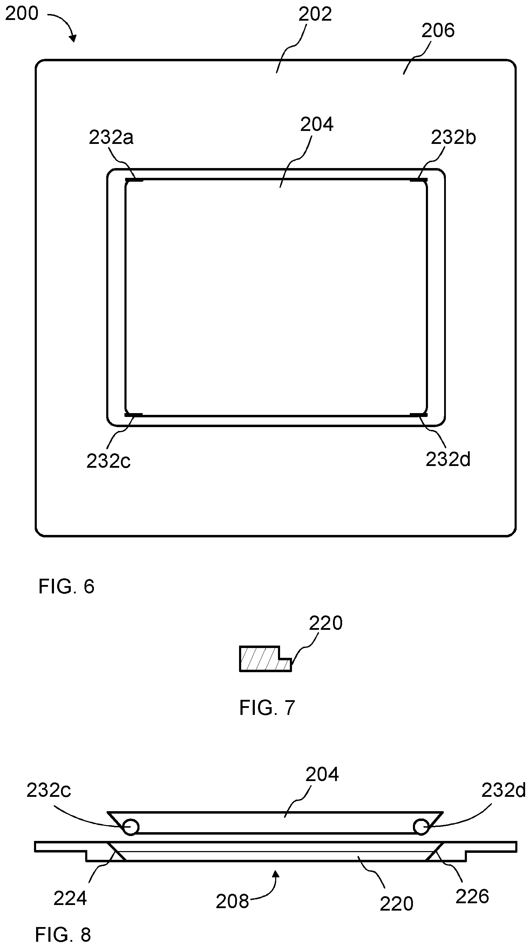

Referring to figures 6-8, the table top structure 200 comprises a table top 202 with an aperture 208 and a movable cover 204. The movable cover 204 comprises wheels 232a-d for facilitating the movement of the movable cover 204. Alternatively, the movable cover may comprise (hard) plastic protrusions or other (hard) material protrusions in the bottom surface for facilitating the movement of the movable cover.

In figure 6, the movable cover 204 is arranged on the aperture 208 such that the movable cover 204 covers the aperture 208. In figure 6, the movable cover 204 is arranged in a first position. The movable cover 204 may be moved in the same way as the movable cover 104 in the first embodiment of the present invention to a second and a third position.

The structure of a first edge 220 is illustrated in figure 7. The movable cover 204 may be moved along the first edge 220 and a second edge (not shown). The table top 202 comprises a first and a second chamfer edge 224, 226 respectively in a first and second end of the aperture 208 for enabling the movable cover 204 to rise on the top surface 206 of the table top 202 when moved in a first or second direction.

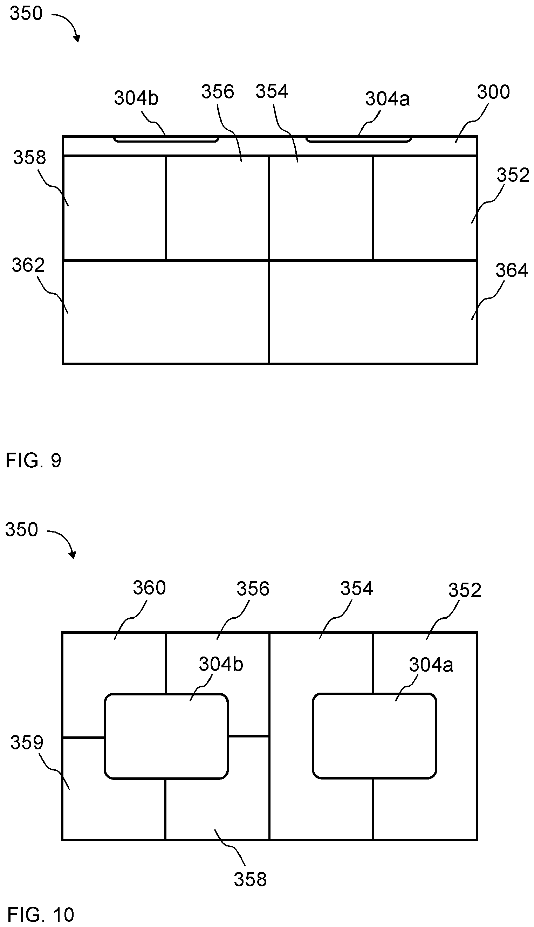

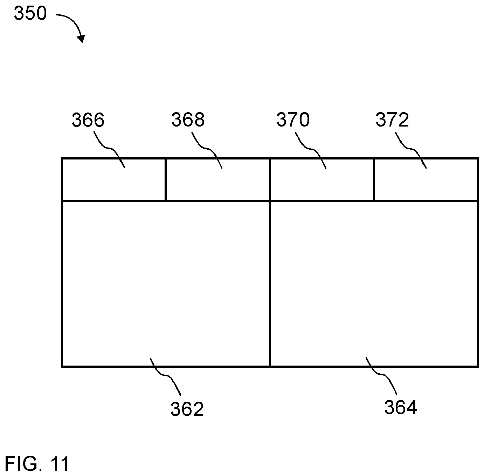

Referring to figures 9-11, the waste disposal system 350 comprises a table top structure 300 with two movable covers 304a, 304b and twelve containers 352-372.

Two containers 352, 354 are arranged below the first movable cover 304a such that waste may be disposed directly in the two containers 352, 354 when the first movable cover 304a is moved to a second or third position as explained in the first and second embodiment of the table top structure of the present invention. The first container 352 may be for bio waste and the second container 354 for plastic waste, for example.

Four containers 356, 358, 359, 360 are arranged below the second movable cover 304b such that waste may be disposed directly in the four containers 356, 358, 359, 360 when the second movable cover 304b is moved to a second or third position as explained in the first and second embodiment of the table top structure of the present invention. Cardboard, mixed waste, glass and metal may be placed in the four containers 356, 358, 359, 360, for example.

The six containers 362-372 in the bottom section may comprise drawers or other means for disposing the items in the containers. The two larger containers 362, 364 may be for recyclable bottles and newspapers, for example. The four smaller containers 366-372 may be for lamps, batteries, electric means and chargers, for example.

A waste disposal system may comprise more or less containers. If the waste disposal system has more containers, the table top structure may comprise more movable covers in the table top such that waste may be disposed directly into more containers. Alternatively, the waste disposal system may have only one movable cover. The movable covers may be arranged at a distance from each other such that the movable covers may be moved in each respective second and third position for opening the aperture below the movable cover.

The containers may have a height of 40cm, for example. The bottom section and upper section of containers may thereby have a total height of 80cm. The first three containers 352, 354, 356 in the upper section may have the width and depth dimensions 30x60cm, for example. The two further containers 358, 360 in the upper section may have the width and depth dimensions 30x30cm, for example. The movable covers 304a, 304b may have the width and depth dimensions 43x33cm, for example. Alternatively, the movable covers may have a smaller size. In some embodiments, the movable covers may have a larger size. Similarly, the containers may be smaller or larger than mentioned above.

Consequently, a skilled person may on the basis of this disclosure and general knowledge apply the provided teachings in order to implement the scope of the present invention as defined by the appended claims in each particular use case with necessary modifications, deletions, and additions.

## Claims

1. A table top structure (100, 200, 300) for waste disposal that comprises
- a table top (102, 202) comprising
- a top surface (106, 206),
- a bottom surface, and
- an aperture (108, 208) for waste disposal,
- a first and second edge (120, 122, 220) arranged respectively on a first and second side of said aperture below said top surface (106, 206) of the table top (102, 202),
- a first and second chamfer edge (124, 126, 224, 226) arranged respectively in a first and second end (128, 130) of the aperture (108, 208),
- a movable cover (104, 204, 304a, 304b) comprising
- a top surface, and
- a bottom surface,
wherein said movable cover being arranged to be movable along said first and said second edge of said table top, and
- in a first position the movable cover is arranged to cover the aperture, in the first position the bottom surface of the movable cover is arranged below the top surface of the table top, and
- in a second position the movable cover is arranged to open the aperture for waste disposal through the aperture, in the second position at least part of the bottom surface of the movable cover is arranged above the top surface of the table top, and
wherein said first and second chamfer edge (124, 126, 224, 226) are arranged to guide said movable cover above the top surface (106, 206) of the table top (102, (202) when the movable cover is moved from said first position.

2. The table top structure of claim 1, wherein a third position is in an opposite direction of the second position, in the third position the movable cover is arranged to open the aperture for waste disposable through the aperture, and at least part of the bottom surface of the movable cover is arranged above the top surface of the table top.

3. The table top structure of any preceding claim, wherein in the first position the top surface of the movable cover is arranged above the top surface of the table top for facilitating the movement of the movable cover.

4. The table top structure of any preceding claim, wherein the movable cover comprises wheels (232a-d) for facilitating the movement of the movable cover.

5. The table top structure of any preceding claim, wherein the movable cover comprises at least one gripping means for facilitating the movement of the movable cover.

6. The table top structure of any preceding claim, wherein the movable cover is a cutting board.

7. The table top structure of any preceding claim, wherein the top surface of the table top comprises a wear-resistant material suitable for kitchen environment

8. A waste disposal system, **characterized in that** the waste disposal system comprises
- a table top structure (100, 200, 300) according to any of claims 1-8, and
- at least one container for waste disposal arranged below the aperture.

9. The waste disposal system of claim 8, comprising at least two containers (352-372, 356, 358, 359, 360, 362-372) arranged below the aperture.

## Patentansprüche

1. Tischplattenaufbau (100, 200, 300) für Abfallentsorgung, der Folgendes aufweist:
- eine Tischplatte (102, 202), die Folgendes aufweist:
- eine Oberseite (106, 206),
- eine Unterseite; und
- eine Öffnung (108, 208) für Abfallentsorgung,
- einen ersten und zweiten Rand (120, 122, 220), der jeweils auf einer ersten und zweiten Seite der Öffnung unter der Oberseite (106, 206) der Tischplatte (102, 202) angeordnet ist,
- eine erste und zweite Fasenkante (124, 126, 224, 226), die jeweils in einem erste und zweiten Ende (128, 130) der Öffnung (108, 208) angeordnet ist,
- eine bewegbare Abdeckung (104, 204, 304a, 304b), die Folgendes aufweist:
- eine Oberseite, und
- eine Unterseite,
wobei die bewegbare Abdeckung derart angeordnet ist, dass sie entlang des ersten und zweiten Rands der Tischplatte bewegbar ist, und
- in einer ersten Position ist die bewegbare Abdeckung derart angeordnet, dass sie die Öffnung abdeckt, wobei die Unterseite der bewegbaren Abdeckung in der ersten Position unter der Oberseite der Tischplatte angeordnet ist, und
- in einer zweiten Position ist die bewegbare Abdeckung derart angeordnet, die Öffnung für die Abfallentsorgung zu öffnen, wobei mindestens ein Teil der Unterseite der bewegbaren Abdeckung in der zweiten Position über der Oberseite der Tischplatte angeordnet ist, und
wobei die erste und zweite Fasenkante (124, 126, 224, 226) angeordnet sind, um die bewegbare Abdeckung über der Oberseite (106, 206) der Tischplatte (102, 202) zu führen, wenn die bewegbare Abdeckung von der ersten Position bewegt wird.

2. Tischplattenaufbau nach Anspruch 1, wobei sich eine dritte Position gegenüberliegend der zweiten Position befindet, wobei die bewegbare Abdeckung in der dritten Position derart angeordnet ist, die Öffnung für Abfallentsorgung durch die Öffnung zu öffnen, und mindestens ein Teil der Unterseite der bewegbaren Abdeckung ist über der Oberseite der Tischplatte angeordnet.

3. Tischplattenaufbau nach einem der vorhergehenden Ansprüche, wobei die Oberseite der bewegbaren Abdeckung in der ersten Position über der Oberseite der Tischplatte angeordnet ist, um die Bewegung der bewegbaren Abdeckung zu ermöglichen.

4. Tischplattenaufbau nach einem der vorhergehenden Ansprüche, wobei die bewegbare Abdeckung Räder (232a-d) zum Ermöglichen der Bewegung der bewegbaren Abdeckung aufweist.

5. Tischplattenaufbau nach einem der vorhergehenden Ansprüche, wobei die bewegbare Abdeckung mindestens ein Greifmittel zum Ermöglichen der Bewegung der bewegbaren Abdeckung aufweist.

6. Tischplattenaufbau nach einem der vorhergehenden Ansprüche, wobei es sich bei der bewegbaren Abdeckung um ein Schneidbrett handelt.

7. Tischplattenaufbau nach einem der vorhergehenden Ansprüche, wobei die Oberseite der Tischplatte ein abriebfestes Material aufweist, das für Küchenanwendungen geeignet ist.

8. Abfallentsorgungssystem, **dadurch gekennzeichnet, dass** das Abfallentsorgungssystem Folgendes aufweist:
- einen Tischplattenaufbau (100, 200, 300) nach einem der Ansprüche 1 bis 8, und
- mindestens einen Behälter für Abfallentsorgung, der unter der Öffnung angeordnet ist.

9. Abfallentsorgungssystem nach Anspruch 8, das mindestens zwei Behälter (352-372, 356, 358, 359, 360, 362-372) aufweist, die unter der Öffnung angeordnet sind.

## Revendications

1. Structure de dessus de table (100, 200, 300) pour l'élimination de déchets, comprenant
- un dessus de table (102, 202) comprenant
- une surface supérieure (106, 206),
- une surface inférieure, et
- une ouverture (108, 208) pour l'élimination de déchets,
- un premier et un deuxième bord (120, 122, 220) disposés respectivement sur un premier et un deuxième côté de ladite ouverture au-dessous de ladite surface supérieure (106, 206) du dessus de table (102, 202),
- un premier et un deuxième bord chanfreiné (124, 126, 224, 226) disposés respectivement dans une première et une deuxième extrémité (128, 130) de l'ouverture (108, 208),
- un couvercle déplaçable (104, 204, 304a, 304b) comprenant
- une surface supérieure, et
- une surface inférieure,
dans lequel ledit couvercle déplaçable est conçu pour être déplaçable le long dudit premier et dudit deuxième bord dudit dessus de table, et
- dans une première position le couvercle déplaçable est disposé de manière à recouvrir l'ouverture, dans la première position la surface inférieure du couvercle déplaçable est disposée au-dessous de la surface supérieure du dessus de table, et
- dans une deuxième position, le couvercle déplaçable est disposé de manière à dégager l'ouverture pour l'élimination de déchets à travers l'ouverture, dans la deuxième position au moins une partie de la surface inférieure du couvercle déplaçable est disposée au-dessus de la surface supérieure du dessus de table, et
dans lequel lesdits premier et deuxième bords chanfreinés (124, 126, 224, 226) sont conçus pour guider ledit couvercle déplaçable au-dessus de la surface supérieure (106, 206) du dessus de table (102, 202) lorsque le couvercle déplaçable est déplacé à partir de ladite première position.

2. Structure de dessus de table selon la revendication 1, dans laquelle une troisième position se situe dans une direction opposée à la deuxième position, dans la troisième position le couvercle déplaçable est disposé de manière à dégager l'ouverture pour l'élimination de déchets à travers l'ouverture, et une partie au moins de la surface inférieure du couvercle déplaçable est disposée au-dessus de la surface supérieure du dessus de table.

3. Structure de dessus de table selon l'une quelconque des revendications précédentes, dans laquelle, dans la première position, la surface supérieure du couvercle déplaçable est disposée au-dessus de la surface supérieure du dessus de table pour faciliter le déplacement du couvercle déplaçable.

4. Structure de dessus de table selon l'une quelconque des revendications précédentes, dans laquelle le couvercle déplaçable comprend des roulettes (232a-d) destinées à faciliter le déplacement du couvercle déplaçable.

5. Structure de dessus de table selon l'une quelconque des revendications précédentes, dans laquelle le couvercle déplaçable comprend au moins un moyen de préhension destiné à faciliter le déplacement du couvercle déplaçable.

6. Structure de dessus de table selon l'une quelconque des revendications précédentes, dans laquelle le couvercle déplaçable est une planche à découper.

7. Structure de dessus de table selon l'une quelconque des revendications précédentes, dans laquelle la surface supérieure du dessus de table comprend un matériau résistant à l'usure adapté pour un environnement de cuisine.

8. Système d'élimination de déchets, **caractérisé en ce que** le système d'élimination de déchets comprend
- une structure de dessus de table (100, 200, 300) selon l'une quelconque des revendications 1 à 8, et
- au moins un conteneur pour l'élimination de déchets disposé sous l'ouverture.

9. Système d'élimination de déchets selon la revendication 8, comprenant au moins deux conteneurs (352-372, 356, 358, 359, 360, 362-372) disposés sous l'ouverture.
